Europäisches Patentamt

(19) European Patent Office

Office européen des brevets

(11) Numéro de publication: **0 077 707**
**B1**

(12) FASCICULE DE BREVET EUROPEEN

(45) Date de publication du fascicule du brevet:
**13.05.87**

(21) Numéro de dépôt: **82401822.0**

(22) Date de dépôt: **05.10.82**

(51) Int. Cl.⁴: **A 01 K 11/00**, G 06 K 7/00,
**G 09 F 3/00**

(54) Appareillage d'identification d'objets.

(30) Priorité: **07.10.81 FR 8118862**

(43) Date de publication de la demande:
**27.04.83 Bulletin 83/17**

(45) Mention de la délivrance du brevet:
**13.05.87 Bulletin 87/20**

(84) Etats contractants désignés:
**BE CH DE GB IT LI LU NL**

(56) Documents cités:
**EP - A - 0 011 810**
**FR - A - 2 438 420**
**US - A - 3 788 278**

(73) Titulaire: **SOCIETE NOUVELLE ROCKALL FRANCE S.A.,**
**Route de Beauvais, F-35500 Vitre (FR)**

(72) Inventeur: **Porcher, Alain, 39 Boulevard Pierre Landais,**
**F-35500 Vitre (FR)**

(74) Mandataire: **Bressand, Georges et al, c/o CABINET**
**LAVOIX 2 Place d'Estienne d'Orves, F-75441 Paris**
**Cedex 09 (FR)**

## Description

La présente invention est relative à une étiquette d'identification d'un objet, notamment à un bouton d'oreille pour marquer le bétail, du type comprenant un élément de support d'information et des moyens pour attacher cet élément à l'objet à identifier, l'élément support présentant une zone d'information destinée à recevoir des données en clair sur l'objet ainsi qu'une zone porteuse d'informations non intelligibles directement par des personnes non autorisées.

D'après le FR-A-2 438 420, on connaît déjà des étiquettes de ce genre dont la zone porteuse d'informations inintelligibles est adaptée pour recevoir des données se présentant sous diverses formes. Par exemple, certaines étiquettes ont un bord spécialement profilé par des encoches de différentes profondeurs auxquelles une valeur particulière est affectée. Une telle étiquette est préparée et lue à l'aide d'appareillages spéciaux à la disposition des personnes autorisées qui, lorsqu'il s'agit de l'identification du bétail peuvent être les services vétérinaires, par exemple. D'autres étiquettes sont pourvues de trous disposés selon un réseau donné à la manière des cartes perforées. D'autres étiquettes encore comportent des pistes magnétiques sur lesquelles les informations sont enregistrées.

Ces étiquettes antérieures ont l'inconvénient d'être limitées en ce qui concerne la quantité d'informations que l'on peut y enregistrer et les possibilités de traitement des informations recueillies. Or, en particulier dans le cas du bétail, il est souhaitable souvent de connaître facilement et rapidement un grand nombre de données concernant un animal, telles que par exemple, son âge, son origine, sa race, ses antécédents vétérinaires, les médicaments administrés, le régime alimentaire auquel il est soumis, etc.

On connaît également d'après le document US-A-3 788 278, un appareil et un procédé d'identification d'une étiquette comportant une zone porteuse d'informations codées, fixées sur le dos d'un animal. Ce procédé et ce dispositif nécessitent d'amener l'animal à un poste fixe et de le maintenir en position pour une identification automatique et sont limités à des animaux à peau dure (cuirs), c'est-à-dire aux bovidés, en raison de la nature de l'étiquette. Ce document conduit à la réalisation d'un dispositif complexe encombrant et rigide, totalement dépendant du comportement de l'animal. En effet, le maintien de la tête de lecture avec la zone porteuse d'informations codées nécessite un contact durable pendant un mouvement relatif de ces deux éléments ne permettant pas d'imaginer son utilisation sur le terrain. Un tel principe entraîne également une limitation des possibilités de communication (lecture et écriture) qui limite les informations codées, au poids ou à des mesures de l'animal.

Par ailleurs, on connaît d'après la demande de brevet européen EP-A-0011810 un système de reconnaissance à distance d'un mobile porteur d'un dispositif répondeur codé, ce mobile étant une vache dans un cas particulier décrit à titre d'exemple. Ce système comporte un poste fixe émettant par une self un rayonnement électromagnétique codé. Ce rayonnement ne peut être détecté par le dispositif répondeur porté par l'animal que si celui-ci se rapproche suffisamment du poste émetteur, moyennant quoi le numéro de la vache est reconnu. Ceci peut déclencher une action prédéterminée telle que la commande d'une mangeoire dans laquelle est alors déversée une ration de nourriture adaptée aux conditions physiologiques de l'animal en question.

Dans ce cas, la communication entre dispositif répondeur et poste émetteur a donc essentiellement pour but de transmettre un numéro ou une commande, tandis que les données de l'ensemble du cheptel sont contenues dans le poste central.

Par conséquent, les données relatives à un individu particulier du cheptel ne se trouvent pas contenues dans le collier de l'animal. Ceci présente, outre la faible quantité d'informations que l'on peut affecter individuellement à chaque animal, un inconvénient majeur qui consiste en ce que les données ne peuvent être prélevées que si l'animal se trouve près du poste émetteur, c'est-à-dire le plus souvent dans l'étable de l'éleveur. Or, il est fréquent que les animaux doivent être transférés d'un endroit à un autre, par exemple.

L'invention a pour but de remédier à ces inconvénients et de fournir une étiquette permettant l'enregistrement et la restitution rapides de toutes sortes d'informations concernant l'objet à identifier et notamment dans le cas des animaux d'augmenter considérablement la quantité d'informations pouvant être associée à chaque animal.

A cet effet, l'invention a pour objet un appareillage pour l'identification d'objets notamment d'animaux sur le terrain, comportant une étiquette d'identification notamment un bouton d'oreille pour marquer le bétail, du type comprenant un élément support d'informations et des moyens pour attacher cet élément à l'animal à identifier, l'élément support présentant une zone d'informations destinée à recevoir des données en clair sur l'animal ainsi qu'une zone porteuse d'informations non intelligibles directement par des personnes non autorisées, un dispositif d'utilisation sous une forme en clair des informations non intelligibles directement et qui sont portées par l'étiquette à l'aide d'un moyen d'enregistrement, un dispositif de communication entre l'étiquette d'identification et le dispositif d'utilisation des informations non intelligibles directement, ledit élément support comprenant des moyens de réception et de guidage d'un organe de contact porté par le dispositif de communication, l'appareillage comportant en outre des moyens d'alignement de l'organe de contact avec la zone porteuse d'informations non intelligibles directement, caractérisé en ce que le dispositif de communication est portatif, en ce que la zone porteuse d'informations non intelligibles directement par des personnes non autorisées comporte une cavité formée dans l'élément support d'informations dans laquelle est disposé ledit moyen d'enregistrement qui est constitué de moyens électroniques sous forme d'un circuit semi-conducteur permettant la mémorisation et la lecture des informations non intelligibles directement relatives à l'animal, et en ce que lesdits moyens de réception et de guidage de l'organe de contact et lesdits moyens d'alignement sont constitués par la cavité elle-même qui est dimensionnée en conséquence.

Grâce à cet appareillage, on obtient une souplesse considérable dans les possibilités d'identification, en faisant usage des techniques modernes de traitement de l'information, notamment par ordinateur.

L'invention sera mieux comprise à l'aide de la description qui va suivre, donnée uniquement à titre d'exemple et faite en se référant aux dessins annexés, sur lesquels:

– la Fig. 1 est une vue en perspective schématique d'une étiquette suivant l'invention et de l'appareillage permettant de l'utiliser;

– la Fig. 2 montre également en perspective schématique, un autre mode de réalisation de l'invention; et

– la Fig. 3 est une vue en coupe partielle, prise selon la ligne 3–3 de la Fig. 2.

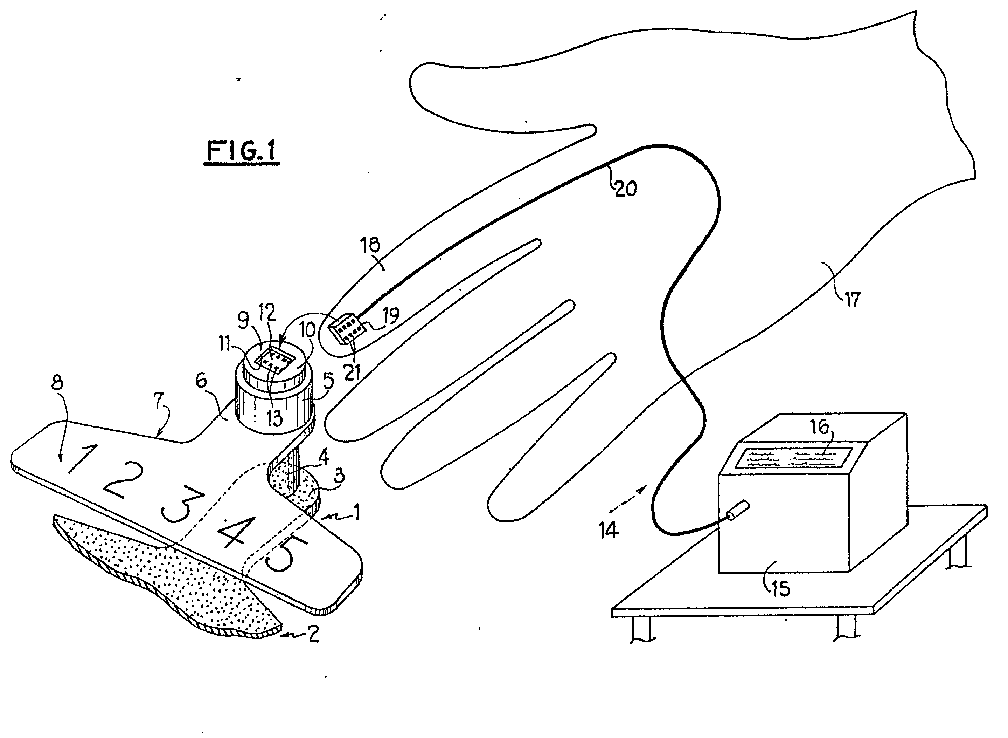

La Fig. 1 montre schématiquement un premier mode de réalisation de l'invention dans lequel une étiquette 1 qui est en fait un bouton d'oreille, est plus spécialement destiné à l'identification d'un animal. Le bouton d'oreille représenté à titre d'exemple est celui décrit dans la demande de brevet français n° 80 16 663 déposée le 29 Juillet 1980 au nom de la Société Nouvelle Rockall France S. A. Il ne sera donc pas décrit en détail pour ce qui est des parties non directement concernées par l'invention.

Ce bouton d'oreille comporte une plaquette 2 munie d'une patte 3 avec laquelle est venu de matière l'élément mâle 4 d'un dispositif de fixation comprenant par ailleurs un élément femelle 5 venu de matière avec la patte 6 d'une seconde plaquette 7 du bouton d'oreille. Cette seconde plaquette présente une zone 8 d'identification en clair dans laquelle est inscrit un numéro par exemple, identifiant l'objet pour l'utilisateur ou plus précisément l'animal pour l'éleveur. Lorsque le bouton d'oreille est mis en place, une partie de l'oreille de l'animal est serrée entre les plaquettes 2 et 7.

L'étiquette présente une autre zone 9 d'identification non intelligible directement pour l'utilisateur. Comme on peut le constater, l'élément femelle 5 du dispositif de fixation de l'étiquette se présente sous la forme d'un ergot cylindrique creux fermé à son extrémité libre par un fond 10 relativement épais. Dans ce fond est ménagée une cavité 11 de forme rectangulaire et destinée à constituer un logement pour un circuit semi-conducteur 12. Ce dernier peut être un circuit intégré et sa fonction électronique peut être celle d'une mémoire permanente ou à accès aléatoire ou encore d'un microprocesseur complet. Il est pourvu de plots de contact 13 pour le transfert des signaux de données. A titre indicatif, on peut utiliser pour le circuit intégré 12, le type suivant: Mémoire programmable à fusibles déposée sur un substrat, fabriquée par exemple par la Société SOREP, 35220 CHATEAUBOURG.

L'étiquette ou bouton d'oreille que l'on vient de décrire est avantageusement utilisé avec un appareillage 14 dont la Fig. 1 donne une représentation schématique. Cet appareillage comporte un dispositif d'utilisation de l'information 15 réalisé de préférence sous la forme d'une unité mobile et pourvue d'un écran d'affichage 16 sur lequel les informations normalement non accessibles par l'utilisateur peuvent être affichées. Naturellement, tout autre dispositif de traitement d'informations pourrait convenir. Un clavier d'introduction de données (non représenté) peut également être prévu.

Ce dispositif d'utilisation 15 peut être relié au circuit intégré 12 de l'étiquette par des moyens de communication qui, dans le présent mode de réalisation comportent un gant 17 dont le doigt d'index 18 est pourvu à son extrémité libre d'un organe de contact 19 branché par un câble 20 au dispositif de traitement de l'information 15.

L'organe de contact 19 comporte des plots de contact 21 dont le nombre et la disposition correspondent à ceux du circuit semi-conducteur 12. Ses dimensions sont adaptées à celles de la cavité 11 pour qu'ils puissent facilement y être introduits et positionnés pour la réalisation de la communication entre le circuit intégré 12 et le dispositif d'utilisation de l'information 15. En outre, cet organe de contact peut lui-même être pourvu d'un circuit électronique (amplificateur, adapteur d'impédance, registres, etc.) pour faciliter le transfert des données. Il est à noter que la circulation des données peut être assurée dans les deux sens entre le circuit intégré 12 et le dispositif d'utilisation de l'information 15.

Les données peuvent être introduites dans le circuit intégré 12 ou en être extraites par application de l'organe de contact 19 sur le circuit intégré 12. On conçoit que cette opération ne pose aucun problème puisqu'il suffit de pincer l'ergot 5 entre le pouce et l'index à l'aide du gant 17.

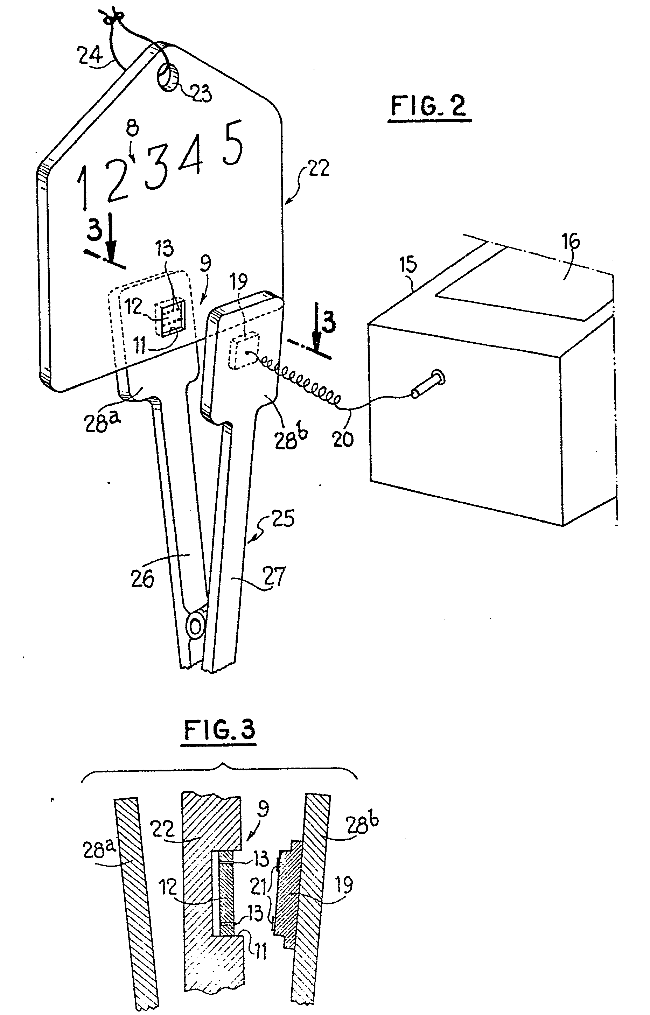

Les Fig. 2 et 3 montrent un autre mode de réalisation de l'invention dans lequel l'étiquette est une simple plaquette 22 munie d'un trou 23 pour le passage d'un lien 24. Cette étiquette qui peut donc facilement être attachée à un objet quelconque présente une zone d'identification en clair 8 et une zone d'identification 9 avec des informations non intelligibles directement. Dans cette deuxième zone 9 est ménagée une cavité 11 dans laquelle est disposé le circuit intégré 12.

Dans ce cas, les moyens de communication comprennent un outil en forme de pince 25 aux extrémités des branches 26 et 27 de laquelle sont prévue des pattes 28a et 28b. La patte 28b porte l'organe de contact 19 sur sa face intérieure.

On voit donc que l'invention fournit une étiquette d'identification d'objets permettant, par la capacité de mémorisation du circuit intégré 12, de mémoriser une grande quantité d'informations relatives à cet objet, tout en permettant par l'appareillage associé une mise sous forme claire, commode de l'information non intelligible de l'étiquette seulement au moment où on en a besoin. Ceci est particulièrement adapté pour l'identification du bétail où, seuls les services vétérinaires disposant d'un tel appareillage, les fraudes sont pratiquement impossibles. Par ailleurs, la mémoire semi-conductrice permet de stocker et de mettre à jour tous les événements survenant au cours de la vie de l'animal tels que les conditions de naissance, les traitements vétérinaires subis, les antécédents, etc. Toutes ces informations peuvent facilement être mises sur fichier central à l'aide de l'appareillage décrit ci-dessus.

## Revendications

1. Appareillage pour l'identification d'objets notamment d'animaux sur le terrain, comportant une étiquette d'identification notamment un bouton d'oreille pour marquer le bétail, du type comprenant un élément support d'informations (7, 22) et des moyens (2, 4, 5; 23, 24) pour attacher cet élément à l'animal à identifier, l'élément support présentant une zone d'informations (8) destinée à recevoir des données en clair sur l'animal ainsi qu'une zone (9) porteuse d'informations non intelligibles directement par des personnes non autorisées, un dispositif (15, 16) d'utilisation sous une forme en clair des informations non intelligibles directement et qui sont portées par l'étiquette à l'aide d'un moyen d'enregistrement (12), un dispositif (17, 25) de communication entre l'étiquette d'identification et le dispositif (15, 16) d'utilisation des informations non intelligibles directement, ledit élément support (7, 22) comprenant des moyens de réception et de guidage d'un organe de contact (19) porté par le dispositif (17, 25) de communication, l'appareillage comportant en outre des moyens d'alignement de l'organe de contact (19) avec la zone (9) porteuse d'informations non intelligibles directement, caractérisé en ce que le dispositif (17, 25) de communication est portatif, en ce que la zone (9) porteuse d'informations non intelligibles directement par des personnes non autorisées comporte une cavité (11) formée dans l'élément support d'informations (7, 22) dans laquelle est disposé ledit moyen d'enregistrement qui est constitué de moyens électroniques (12) sous forme d'un circuit semi-conducteur permettant la mémorisation et la lecture des informations non intelligibles directement relatives à l'animal, et en ce que lesdits moyens de réception et de guidage de l'organe de contact (19) et lesdits moyens d'alignement sont constitués par la cavité elle-même qui est dimensionnée en conséquence.

2. Appareillage suivant la revendication 1, caractérisé en ce que ledit circuit semi-conducteur (12) est une mémoire permanente ou une mémoire à accès direct.

3. Appareillage suivant la revendication 1, caractérisé en ce que ledit circuit semi-conducteur est un microprocesseur.

4. Appareillage suivant l'une quelconque des revendications 1 à 3, caractérisé en ce que ledit dispositif portatif de communication comprend un gant (17) dont l'un des doigts (18) porte l'organe de contact (19) dont des contacts (21) sont destinés à être appliqués contre des contacts (13) dudit circuit semi-conducteur (12).

5. Appareillage suivant l'une quelconque des revendications 1 à 3, caractérisé en ce que ledit dispositif portatif de communication comprend une pince (25) destinée à pincer un bord de ladite étiquette (22) et portant à l'extrémité libre de l'une de ses branches (28b) l'organe de contact dont des contacts (21) sont destinés à être appliqués contre des contacts (13) dudit circuit semi-conducteur (12).

6. Appareillage suivant l'une quelconque des revendications 4 et 5, caractérisé en ce que ledit organe de contact comprend un bloc de contact (19) dont les dimensions sont ajustées à celles de ladite cavité (11) de l'étiquette et qui est pourvu sur une face apparente de plots de contact (21) destinés à être serrés contre des plots de contacts (13) du circuit semi-conducteur (12) et en ce que le bloc de contact est relié à un câble (20) pour le branchement au dispositif d'utilisation (15).

## Claims

1. Apparatus for the identification of objects, in particular animals in the field, comprising an identification label in particular an ear clip for marking cattle, of the type comprising an information carrying unit (7, 22) and means (2, 4, 5; 23, 24) for attaching this unit to the animal to be identified; the information carrying unit having a region (8) of informations for receiving intelligible data concerning the animal; a region (9) carrying informations which are not directly intelligible for unauthorized personns, a device (15, 16) for utilizing the informations not directly intelligible carried by the label, in an intelligible form, through recording means (12); a communication device (17, 25) disposed between the identification label and the device (15, 16) for utilisation of the not directly intelligible informations, the information carrying unit (7, 22) comprising, receiving and guiding means of a contact element (19) supported by the communication device (17, 25); the apparatus further comprising means for aligning the contact element (19) with the region (9) carrying not directly intelligible informations, characterized in that the communication device is portable, in that the region (9) carrying informations which are not directly intelligible for unauthorized personns comprises a cavity (11) formed in the informations carrying unit (7, 22) wherein is disposed said recording means, said recording means including electronic means (12) in the form of a semiconductor circuit permitting the storage and the reading of the not directly intelligible informations concerning the animal, and in that said receiving and guiding means of the contact element (19) and said aligning means are constituted by the cavity itself which is sized accordingly.

2. Apparatus according to claim 1, characterized in that the semiconductor circuit (12) is a permanent memory or a direct access memory.

3. Apparatus according to claim 1, characterized in that the semiconductor circuit is a microprocessor.

4. Apparatus according to anyone of claims 1 to 3, characterized in that said portable communication device comprises a glove (17), the contact element (19) being carried by one of the fingers (18) of said glove and having contact means (21) for application thereof against contact means (13) of said semiconductor circuit (12).

5. Apparatus according to anyone of claims 1 to 3, characterized in that said portable communication device comprise a tongs (25) adapted to pinch an edge portion of said label and carrying at the free end of one of its branches (28b) the contact element having contact means (21) adapted to be applied against contact means (13) of said semiconductor circuit (12).

6. Apparatus according to anyone of claims 4 and 5, characterized in that said contact element comprises a contact unit (19) whose dimensions are adapted to those of said cavity (11) of the label and which is provided, on an exposed side thereof, with contact studs (21) for clamping against contact studs (13) of the semiconductor circuit (12) and the contact unit is connected to a cable (20) for connection to the utilisation device (15).

**Patentansprüche**

1. Einrichtung zur Identifikation von Objekten, insbesondere Tieren, an Ort und Stelle, welche eine Identifikationsmarke, insbesondere einen Ohrknopf zur Viehmarkierung, aufweisen, mit einem Informationsträgerelement (7, 22) und Mitteln (2, 4, 5; 23, 24) zur Anbringung dieses Elements an einem zu identifizierenden Tier, wobei das Trägerelement einen Informationsbereich (8) zur Aufnahme von Daten über das Tier in Klarschrift sowie einen Bereich (9), welcher für unauthorisierte Personen nicht direkt verständliche Information trägt, aufweist, einer Vorrichtung (15, 16) zur Auswertung in Klarschriftform der nicht direkt verständlichen Information, welche die Marke mit Hilfe von Aufzeichnungsmitteln (12) trägt, einer Kommunikationsvorrichtung (17, 25) zur Kommunikation zwischen der Identifikationsmarke und der Auswertvorrichtung (15, 16) für die nicht direkt verständliche Information, wobei das Trägerelement (7, 22) Mittel zur Aufnahme und Führung eines Kontaktorgans (19), welches von der Kommunikationsvorrichtung (17, 25) getragen wird, aufweist, wobei die Einrichtung ferner Mittel zur Ausrichtung des Kontaktorgans (19) auf den nicht direkt verständliche Information tragenden Bereich (9) aufweist, dadurch gekennzeichnet, dass die Kommunikationsvorrichtung (71, 25) tragbar ist, dass der für unauthorisierten Personen nicht direkt verständliche Information tragende Bereich (9) eine im Informationsträgerelement (7, 22) ausgebildete Ausnehmung (11) aufweist, in welcher die Aufzeichnungsmittel angeordnet sind, welche durch elektronische Mittel (12) in Form einer Halbleiterschaltung, die das Speichern und Auslesen von auf das Tier bezogener direkt nicht verständlicher Information gestattet, gebildet sind, und dass die Mittel zur Aufnahme und Führung des Kontaktorgans (19) und die Ausrichtmittel durch die Ausnehmung selbst, die entsprechend dimensioniert ist, gebildet sind.

2. Einrichtung nach Anspruch 1, dadurch gekennzeichnet, dass die Halbleiterschaltung (12) ein Fest- oder ein Direktzugriffsspeicher ist.

3. Einrichtung nach Anspruch 1, dadurch gekennzeichnet, dass die Halbleiterschaltung ein Mikroprozessor ist.

4. Einrichtung nach irgendeinem der Ansprüche 1 bis 3, dadurch gekennzeichnet, dass die tragbare Kommunikationsvorrichtung einen Handschuh (17) umfasst, bei welchem einer der Finger (18) das Kontaktorgan (19), bei welchem Kontakte (21) für ein Anbringen gegen Kontakte (13) der Halbleiterschaltung (12) bestimmt sind, trägt.

5. Einrichtung nach irgendeinem der Ansprüche 1 bis 3, dadurch gekennzeichnet, dass die tragbare Kommunikationsvorrichtung eine Zange (25) umfasst, welche für ein Erfassen eines Randes der Marke (22) eingerichtet ist und an einem freien Ende des einen ihrer Schenkel (28b) das Kontaktorgan, bei welchem Kontakte (21) für ein Anlegen gegen Kontakte (13) der Halbleiterschaltung (12) bestimmt sind, trägt.

6. Einrichtung nach irgendeinem der Ansprüche 4 und 5, dadurch gekennzeichnet, dass das Kontaktorgan einen Kontaktblock (19) umfasst, dessen Abmessungen auf diejenigen der Ausnehmung (11) der Marke abgestimmt sind und der auf einer offenen Fläche mit einem Kontaktsatz (21) versehen ist, welcher für ein Anpressen an einen Kontaktsatz (13) der Halbleiterschaltung (12) bestimmt ist, und dass der Kontaktblock mit einem Kabel (20) für den Anschluss an die Auswertvorrichtung (15) verbunden ist.

FIG.1

0 077 707

FIG. 2

FIG. 3

9